# EUROPÄISCHE PATENTSCHRIFT

(11) **EP 1 259 561 B1**
(45) Veröffentlichungstag und Bekanntmachung des Hinweises auf die Patenterteilung: **04.08.2004**
(21) Anmeldenummer: 01925342.6
(22) Anmeldetag: 20.02.2001
(51) Int. Cl.: C08G 65/26, B01J 27/26

(54) **VERFAHREN ZUR HERSTELLUNG VON MULTIMETALLCYANIDVERBINDUNGEN**
METHOD FOR PRODUCING MULTIMETAL CYANIDE COMPOUNDS
PROCEDE DE PRODUCTION DE COMPOSES DU TYPE DES CYANURES POLYMETALLIQUES

(30) Priorität: 29.02.2000 DE 10009568
(43) Veröffentlichungstag der Anmeldung: 27.11.2002
(73) Patentinhaber: BASF AKTIENGESELLSCHAFT, 67056 Ludwigshafen (DE)
(72) Erfinder: GROSCH, Georg, Heinrich, 67098 Bad Dürkheim (DE); FRANKE, Dirk, 67134 Birkenhelde (DE); MUNZINGER, Manfred, 67246 Dirmstein (DE); HARRE, Kathrin, 01109 Dresden (DE); BAUM, Eva, 01987 Schwarzheide (DE); STÖSSER, Michael, 67141 Neuhofen (DE)
(86) Internationale Anmeldenummer: PCT/EP2001/001893
(87) Internationale Veröffentlichungsnummer: WO 2001/064772

(56) Entgegenhaltungen:
- EP-A- 0 755 716
- WO-A-01/04183
- DE-A- 19 834 572
- US-A- 6 018 017

## Beschreibung

Multimetallcyanid-Katalysatoren, auch als DMC-Katalysatoren bezeichnet, sind effektive Katalysatoren zur Herstellung von Polyetherolen durch ring-öffnenden Polymerisation von Alkylenoxiden. Multimetallcyanid-Katalysatoren können bei der Alkylenoxidpolymerisation in Konzentrationen bis zu kleiner 100 ppm eingesetzt werden. In WO 97/23,544 werden Katalysatorkonzentrationen kleiner gleich 15 ppm beschrieben. Bei Multimetallcyanid-Katalysatorkonzentrationen kleiner 100 ppm treten jedoch sehr häufig Probleme bei der Polymerisation der Alkylenoxide auf. So kann es während der Polymerisation zu einer schleichenden Deaktivierung des Katalysators kommen. Bei Batchfahrweise kann es zu deutlichen Qualitätsschwankungen der so hergestellten Polyetherole kommen. So können sich von Batchansatz zu Batchansatz unterschiedliche Molgewichtsverteilungen, Viskositäten und Gehalte an ungesättigten Bestandteilen ergeben.

Ein Nachlassen der Katalysatoraktivität bei der Polymerisation kann bei einem vollständigen Einschlafen der Reaktion zu gefährlichen Zuständen in den Produktionsanlagen führen.

Ein großes Problem, das bei der Verwendung von Multimetallcyanid-Katalysatoren in Katalysatorkonzentrationen kleiner 100 ppm auftritt, ist die Bildung von sehr hochmolekularen Anteilen in den Polyethern. Wie in US 5,919,988 beschrieben, können diese hochmolekularen Anteile in kritischen Polyurethanschaumrezepturen zum Kollaps der Schäume führen.

Zur Vermeidung oder Verringerung der hochmolekularen Polyetheranteile wurden eine Reihe von Ansätzen erarbeitet. US 5,777,177 beschreibt eine spezielle Fahrweise der Polyethersynthese, die unter anderem zur Verringerung der hochmolekularen Polyetheranteil geeignet sein sollte.

Auch bei der Herstellung der Multimetallcyanid-Katalysatoren fehlte es nicht an Versuchen, durch ein verbessertes Herstellungsverfahren für Multimetallcyanid-Katalysatoren bei der Verwendung der Katalysatoren zur Polyethersynthese die Bildung von hochmolekularen Polyethern zu unterdrücken. So beschreibt US 5,470,813 die Herstellung verbesserter Multimetallcyanid-Katalysatoren, welche im wesentlichen amorph sind und hergestellt werden, indem die Edukte bei der Fällung unter stark scherendem Rühren vereinigt werden. Eine verbesserte Ausführung des Verfahrens gemäß US 5,470,813 wird in US 5,712,216 offenbart. Hier wird ein verbesserter Multimetallcyanid-Katalysator durch Reaktion wässriger Cyanometallat- und Metallsalz-Lösungen in Gegenwart von tert.-Butanol dadurch erzeugt, daß die Cyanometallat-Lösung unter stark scherendem Rühren zur Metallsalz-Lösung gegeben wird.

Dieses stark scherende Rühren hat unter anderem möglicherweise den Effekt, daß Agglomerate, die sich während der Fällung bilden, dadurch zerschlagen werden.

Die Agglomerierung der DMC-Katalysatoren sollte möglichst unterdrückt werden, da als eine mögliche Ursache für die ablaufenden Nebenreaktionen die Verringerung der Zahl der aktiven Zentren der DMC-Katalysatoren durch die Ausbildung der Agglomerate angenommen wird.

Die Fällung unter stark scherenden Rühren ist bei großen Ansätzen, wie sie bei der technischen Herstellung der DMC-Katalysatoren notwendig sind, technisch äußerst aufwendig und problematisch, insbesondere im Hinblick auf eine reproduzierbare gute Qualität des Katalysators. Die Fällung unter stark scherendem Rühren ist dann besonders problematisch, wenn an Stelle amorpher Stoffe kristalline Festkörper mit gut ausgebildeter Kristallinität gewonnen werden sollen.

Aufgabe der vorliegenden Erfindung war es, Multimetallcyanid-Katalysatoren bereitzustellen, die nicht oder nur schwach agglomeriert sind, ohne daß aufwendige technische Lösungen notwendig sind. Insbesondere sollten Multimetallcyanid-Katalysatoren vom Typ Zinkhexacyanocobaltat mit einer sehr guten Kristallstruktur bereitgestellt werden.

Überraschenderweise wurde nun gefunden, daß schwach oder nicht agglomerierte, hoch-aktive Multimetallcyanid-Katalysatoren hergestellt werden können, indem die Herstellung zweistufig abläuft und in einem ersten Schritt eine Umsetzungsstufe durchlaufen wird, bei welcher der DMC-Katalysator nach der Fällung zunächst in einer von der gewünschten Kristallstruktur abweichenden Zwischenstufe vorliegt und danach in einem zweiten Schritt in die gewünschte Kristallstruktur überführt wird. Dieser Schritt der Überführung des DMC-Katalysators in die gewünschte Kristallstruktur wird im folgenden als Umkristallisation bezeichnet.

Gegenstand der Erfindung ist demzufolge ein Verfahren zur Herstellung von DMC-Katalysatoren durch Umsetzung eines Metallsalzes mit einer Cyanometallatverbindung, dadurch gekennzeichnet, daß die Umsetzung in zwei Stufen durchgeführt wird, wobei zunächst in einem ersten Schritt eine Umsetzungsstufe durchlaufen wird, bei welcher der DMC-Katalysator in einer von der gewünschten Kristallstruktur abweichenden Zwischenstufe vorliegt und danach in einem zweiten Schritt in die gewünschte Kristallstruktur überführt wird.

Gegenstand der Erfindung sind weiterhin DMC-Katalysatoren, herstellbar nach dem erfindungsgemäßen Verfahren.

Gegenstand der Erfindung sind weiterhin die Verwendung der nach dem erfindungsgemäßen Verfahren hergestellten DMC-Katalysatoren zur ringöffnenden Polymerisation von Alkylenoxiden sowie ein Verfahren zur Herstellung von Polyetheralkoholen durch ringöffnende Polymerisation von Alkylenoxiden unter Verwendung der erfindungsgemäßen DMC-Katalysatoren.

Die nach dem erfindungsgemäßen Verfahren hergestellten DMC-Katalysatoren sind schwach oder nicht agglomeriert und zeichnen sich durch eine hohe katalytische Aktivität aus. Unter Agglomeration versteht man die Zusammenlagerung von Primärpartikeln zu Sekundärpartikeln. Die Größe und der Habitus der Primärpartikel lassen zum Beispiel durch Rasterelektronenmikroskopaufnahmen bestimmen. Mit Rasterelektronenmikroskopaufnahmen lassen sich auch erste Aussagen über die Agglomeration der Primärpartikel machen.

Im Sinne der vorliegenden Erfindung werden Festkörper als agglomeriert betrachtet, wenn mehr als 50% der im Festkörper vorliegenden Sekundärpartikel aus mehr als 20-30 Primärpartikeln bestehen. Unter schwach agglomerierten Festkörpern versteht man Festkörper, bei denen mehr als 50% der Sekundärpartikel aus weniger als 10 Primärpartikeln bestehen.

Eine Möglichkeit, Aussagen über die Agglomeration der Festkörper zu bekommen, ist die Kombination von Rasterelektronenmikroskopieaufnahmen und Partikelgrößenmessung mit Laserbeugung. Mit Rasterelektronenmikroskopieaufnahmen lassen sich die Größen der Primärkristallite sehr gut bestimmen. Die Größe der Sekundärpartikel läßt sich wiederum mit Laserbeugung gut bestimmen. Als nicht oder nur schwach agglomeriert werden Festkörper dann bezeichnet, wenn die mittlere Sekundärpartikelgröße, bestimmt durch Laserbeugung (X50-Wert), von den Größen der Primärpartikel weniger als Faktor 10 abweicht.

Unter Primärkristallit oder Primärpartikel wird der einzelne Kristallit verstanden, wie er z.B. auf Rasterelektronenmikroskopieaufnahmen zu sehen ist. Diese Primärpartikel können sich dann zu Agglomeraten, den sogenannten Sekundärpartikeln, zusammenlagern.

Durch das erfindungsgemäße Verfahren, bei dem die Multimetallcyanidverbindungen mit der gewünschten Kristallstruktur nicht direkt gefällt, sondern durch einen Fällungs- und einen nachfolgenden Umkristallisationsschritt erzeugt werden, können diese in schwach oder nicht agglomerierter Form gewonnen werden.

Vorzugsweise haben die nach dem erfindungsgemäßen Verfahren hergestellten DMC-Katalysatoren eine kristalline Struktur und ein monoklines Kristallsystem.

Die nach dem erfindungsgemäßen Verfahren hergestellten DMC-Katalysatoren haben zumeist die allgemeine Formel (I)

M¹ ₐ[M²(CN)_{b}(A)_{c}]_{d} · fM¹ _{g}Xₙ · h(H2O) · eL (I),

wobei
- M¹: ein Metallion, ausgewählt aus der Gruppe, enthaltend Zn2+, Fe2+, Co3+, Ni2+, Mn2+, Co2+, Sn2+, Pb2+, Mo4+, Mo6+, A13+, V4+, V5+, Sr2+, W4+, W6+, Cr2+, Cr3+, Cd2+, Hg2+, Pd2+, Pt2+, V2+, Mg2+, Ca2+, Ba2+, Cu2+,
- M²: ein Metallion, ausgewählt aus der Gruppe, enthaltend Fe2+, Fe3+, Co2+, Co3+, Mn2+, Mn3+, V4+, V5+, Cr2+, Cr3+, Rh3+, Ru2+, Ir3+
bedeuten und M¹ und M² gleich oder verschieden sind,
- A: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- X: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- L: ein mit Wasser mischbarer Ligand, ausgewählt aus der Gruppe, enthaltend Alkohole Aldehyde, Ketone, Ether, Polyether, Ester, Polyester, Polycarbonat, Harnstoffe, Amide, Nitrile, und Sulfide,
sowie
- a, b, c, d, g und n: so ausgewählt sind, daß die Elektroneutralität der Verbindung gewährleistet ist, und
- e: die Koordinationszahl des Liganden, eine gebrochene oder ganze Zahl größer oder gleich 0, bedeutet,
- f: eine gebrochene oder ganze Zahl größer oder gleich 0
- h: eine gebrochene oder ganze Zahl größer oder gleich 0 bedeutet,
wobei die erfindungsgemäßen Multimetallcyanid-Verbindungen der Formel (I) vorzugsweise kristallin sind.

Bevorzugt sind dabei kristalline Multimetallcyanidverbindungen, bei denen M¹ gleich Zn(II) und M² gleich Co(III) ist. Diese bevorzugte Klasse an Multimetallcyanidverbindungen wird im weiteren als Zinkhexacyanocobaltate bezeichnet.

In der Klasse der Zinkhexacyanocobaltate gibt es wiederum Ausführungsformen der Formel (I), die besonders bevorzugt sind.

Besonders bevorzugt sind kristalline Multimetallcyanid-Verbindungen, die als Anion X Formiat, Acetat oder Propionat enthalten, wobei f dann größer 0 ist, und die Röntgendiffraktogramme besitzen, wie sie in DE 197,42,978 beschrieben werden. Von diesen Verbindungen sind wiederum solche bevorzugt, die als Anion X Acetat enthalten und insbesondere solche, die ein monoklines Kristallsystem besitzen.

Von diesen Multimetallcyanid-Verbindungen, bei denen M¹ Zn(II), M² Co(III), X Acetat bedeuten, und die ein monoklines Kristallsystem besitzen, gibt es hinsichtlich der Morphologie der Primärkristalle weitere bevorzugte Ausführungsformen. Bevorzugt sind plättchenförmige Multimetallcyanidverbindungen, d.h. Multimetallcyanidverbindungen, bei denen die Länge und die Breite der Primärkristallite mindestens dreimal größer ist, als Dicke der Primärkristallite.

Wie oben beschrieben, besteht das erfindungsgemäße Herstellungsverfahren aus mindestens zwei Schritten:
(a) Fällung einer Multimetallcyanidphase, die im weiteren als Vorläuferphase bezeichnet wird, durch Umsetzung eines Metallsalzes mit einer Cyanometallatverbindung (Fällungsschritt),
(b) Umkristallisation der Multimetallcyanid-Vorläuferphase in die gewünschte katalytisch aktive Multimetallcyanidphase, die im weiteren als Katalysatorphase bezeichnet wird (Umkristallisationsschritt).

Unter Multimetallcyanidphase wird eine Multimetallcyanidverbindung mit einer bestimmten Kristallstruktur verstanden.

Die Fällung der Multimetallcyanid-Vorläuferphase erfolgt wie in der Literatur beschrieben durch Vereinigung einer wässrigen Metallsalz-Lösung M¹_{g}Xₙ, wobei M¹, X, g und n die in Formel I beschriebene Bedeutung haben, mit einer wässrigen Cyanometallat-Lösung, die mindestens eine Cyanometallat-Verbindung der Formel Bₓ[M²(CN)_{b}(A)_{c}]_{z} enthält, wobei B gleich Alkali, Erdalkali und/oder Wasserstoff ist, M², A, b und c die in Formel I beschriebene Bedeutung haben und x und z Zahlen größer null sind. Besonders bevorzugt ist B gleich Wasserstoff, wie in EP 862,947 beschrieben.

Entsprechend der oben beschriebenen bevorzugten Multimetallcyanid-Katalysatorphasen sind als Metallsalze Zinkcarboxylate, insbesondere Zinkformiat, Zinkacetat und Zinkpropionat bevorzugt.

Ferner können gegebenenfalls eine der beiden oder beide wässrige Lösungen mindestens einen organischen Liganden L ausgewählt aus den oben beschriebenen Stoffklassen oder gemäß WO 98/16,310, Seite 6, Zeilen 13-26 beschrieben, und/oder mindestens einen oberflächenaktiven Stoff, enthalten. Die eingesetzten oberflächenaktiven Verbindungen können insbesondere anionische, kationische, nichtionische und/oder polymere Tenside sein.

Insbesondere werden nichtionische und/oder polymere Tenside verwendet. Aus dieser Gruppe ausgewählt sind insbesondere Fettalkoholalkoxylate, Coblockpolymere verschiedener Epoxide mit unterschiedlicher Hydrophilie, Rizinusölalkoxylate oder Coblockpolymere aus Epoxiden und anderen Monomeren, wie Acrylsäure oder Methacrylsäure. Die verwendeten Substanzen sollten eine mäßige bis gute Wasserlöslichkeit besitzen.

Erfindungsgemäß verwendete Fettalkoholalkoxylate sind herstellbar durch Umsetzung eines Fettalkohols, vorzugsweise mit 8-36 Kohlenstoffatomen, insbesondere 10-18 Kohlenstoffen, mit Ethylenoxid, Propylenoxid und/oder Butylenoxid. Der Polyetherteil des erfindungsgemäß verwendeten Fettalkoholalkoxylats kann dabei aus reinen Ethylenoxid-, Propylenoxid- oder Butylenoxid-Polyethern bestehen. Ferner sind auch Copolymere aus zwei oder drei verschiedenen Alkylenoxiden oder Coblockpolymere aus zwei oder drei verschiedenen Alkylenoxiden möglich. Fettalkoholalkoxylate, die reine Polyetherketten besitzen, sind z.B. Lutensol® AO-Marken der BASF-AG. Fettalkoholalkoxylate mit Coblockpolymeren als Polyetherteil sind Plurafac® LF-Marken der BASF AG. Besonders bevorzugt bestehen die Polyetherketten aus 2 bis 50, insbesondere aus 3-15 Alkylenoxideinheiten.

Coblockpolymere als Tenside enthalten zwei verschiedene Polyetherblöcke, die sich in ihrer Hydrophilie unterscheiden. Erfindungsgemäße verwendbare Coblockpolymere können aus Ethylenoxid und Propylenoxid bestehen (Pluronic®-Marken, BASF AG). Die Wasserlöslichkeit wird dabei über die Längen der verschiedenen Blöcke gesteuert. Die Molmassen dieser Verbindungen liegen zumeist im Bereich von 500 Da bis 20000 Da, bevorzugt von 1000 Da bis 6000 Da, und insbesondere 1500-4000Da. Bei den Ethylenoxid/Propylenoxid-Copolymeren beträgt der Ethylenoxid-Anteil von 5 bis 50 Gew.-% und der Propylenoxid-Anteil von 50 bis 95 Gew.-%.

Erfindungsgemäße Copolymere aus Alkylenoxid mit anderen Monomeren haben bevorzugt Ethylenoxidblöcke. Als andere Monomere können beispielsweise Butylmethacrylat (PBMA/PEO BE1010 / BE1030, Fa. Th. Goldschmidt), Methylmethacrylat (PMMA/PEO ME1010 /ME1030, Fa. Th. Goldschmidt) oder Methacrylsäure sein (EA-3007, Fa. Th. Goldschmidt).

Die oberflächenaktiven Verbindungen werden im allgemeinen nicht in die Struktur der Multimetallcyanidverbindungen eingebaut oder komplex gebunden und können nach deren Herstellung herausgewaschen werden.

Die wässrige Cyanometallat-Lösung hat vorzugsweise einen Gehalt an M² von 0,1 g/l bis 100 g/l, bevorzugt von 1 g/l bis 20 g/l, insbesondere bevorzugt von 5 g/l bis 15 g/l.

Der M¹-Gehalt in der Metallsalz-Lösung beträgt zwischen 0,1 Gew.-% und 10 Gew.-%, bevorzugt zwischen 1 Gew.-% und 5 Gew.-% bezogen auf die Masse an Metallsalz-Lösung.

In einer bevorzugten Ausführungsform des Herstellungsverfahrens wird beim Fällungsschritt die Cyanometallat-Lösung vorgelegt und die Metallsalz-Lösung zugefahren. Die Menge an Metallsalz-Lösung wird dabei so gewählt, daß die Multimetallcyanid-Vorläuferphase erzeugt werden kann.

Die Temperatur beim Fällungsschritt liegt vorzugsweise im Bereich von 20 bis 95°C, insbesondere 35 bis 80°C. Die Metallsalz-Lösung wird vorzugsweise innerhalb einer Zeit von 5 min bis 5h, insbesondere 30 min bis 3h zudosiert.

Das Verhältnis von M¹:M² im Fällungsschritt liegt je nach gewünschter Vorläuferverbindung bei 1:1 bis 3:1. Bei der Herstellung von Multimetallcyanid-Verbindungen, die als M¹ Zn(II), als M² Co(III), als X Formiat, Acetat oder Propionat enthalten und bevorzugt solche, die als X Acetat enthalten und die ein monoklines Kristallsystem besitzen, wird erfindungsgemäß im Fällungsschritt eine Zinkhexacyanocobaltatphase gefällt, die ein kubisches Kristallsystem besitzt. Für diesen Fall beträgt das M¹:M²-Verhältnis vorzugsweise 1,5:1.

Die eigentlich gewünschte Multimetallcyanid-Katalysatorphase wird nun in dem zweiten Verfahrensschritt, wie oben beschrieben auch als Umkristallisationsschritt bezeichnet, erzeugt. Der Umkristallisationsschritt kann sofort an den ersten Verfahrensschritt, auch als Fällungsschritt bezeichnet, angeschlossen werden. Es können aber auch der Fällungs- und der Umkristallisationsschritt räumlich und/oder zeitlich voneinander getrennt werden.

Im Umkristallisationsschritt wird nun die im Fällungsschritt hergestellte Multimetallcyanid-Vorläuferphase durch Einstellung geeigneter Bedingungen in die Multimetallcyanidverbindung mit der gewünschten Kristallstruktur umkristallisiert.

Die Phasen der Multimetallcyanidverbindungen, die nach dem ersten und dem zweiten Schritt vorliegen, müssen sich natürlich in mindestens einer meßbaren Eigenschaft, wie Zusammensetzung, Röntgendiffraktogramm, Morphologie oder Teilchengröße, Agglomeration unterscheiden.

Zur Einstellung der für die Umkristallisation geeigneten Bedingungen werden zum Beispiel die Temperatur und/oder der pH-Wert der Fällsuspension und/oder das Verhältnis M¹:M² durch Zugabe von Metallsalz- und/oder Cyanometallalat-Lösung. Beim Verändern des Verhältnis M¹:M² kann es auch zu Änderungen der absoluten Konzentration von M¹ und M² kommen. Die zur Änderung des Verhältnis M¹:M² zuzugebenden Lösungen können auch mit Wasser mischbare Stoffe, wie Liganden L und/oder oberflächenaktive Stoffe enthalten. Ferner können zwischen Fällungs- und Umkristallisierungsschritt zusätzliche mit Wasser mischbare Stoffe, wie die Liganden L, und/oder oberflächenaktive Stoffe zugegeben werden.

In einer weiteren Ausführungsform des erfindungsgemäßen Verfahrens ist es möglich die Multimetallcyanid-Vorläuferphase aus der Fällsuspension abzutrennen und den so gewonnenen Feststoff für die Umkristallisation erneut zu suspendieren.

Außerdem müssen die Metallsalz-Lösungen, die in der Fällung und Umkristallisation verwendet werden, nicht gleich sein. Sie können sich sowohl im Metallsalz, der Konzentration und dem möglichen Zusatz an Liganden L und/oder oberflächenaktiven Stoff unterscheiden. Dies gilt genauso für die Cyanometallat-Lösung. Bei dieser Ausführungsform des erfindungsgemäßen Verfahrens ist es möglich, die Metalle in der Multimetallcyanidverbindung partiell auszutauschen.

Bei der Umkristallisation wird entweder die in Wasser suspendierte Verbindung aus dem Fällungsschritt vorgelegt und, falls eine Änderung des M¹:M²-Verhältnisses für die Umkristallisation notwendig ist, die entsprechende Menge an Metallsalz- oder Cyanometallat-Lösung zugegeben, oder die Metallsalz- oder Cyanometallat-Lösung wird vorgelegt und die in Flüssigkeit dispergierte Multimetallcyanid-Vorläuferphase wird zugegeben. Die Dosierung kann zwischen 2 min und 5h, bevorzugt 15 min und 2h, dauern.

Die bei der Umkristallisation angewendeten Temperaturen liegen zwischen 20°C und 95°, bevorzugt 40°C und 90°C. Die Temperatur bei der Umkristallisation ist in der Regel unterschiedlich zur Temperatur bei der Fällung. Sollte jedoch sowohl Fällung als auch Umkristallisation bei gleicher Temperatur durchgeführt werden können, so wird dies aus verfahrenstechnischen Gründen bevorzugt.

Das M¹:M²-Verhältnis in der Umkristallisation kann von 1:10 bis 10:1 betragen, bevorzugt wird aber ein M¹:M²-Verhältnis von 1,5:1 bis 3:1.

Im Falle der Herstellung der bevorzugten Multimetallcyanid-Katalysatorphasen, die als M¹ Zn(II), als M² Co(III), als X Acetat enthalten, ein monoklines Kristallsystem besitzen, und aus einer kubischen Vorläuferphase umkristallisiert werden, ist das M¹:M²-Verhältnis bei der Umkristallisation größer 1,9:1 und bevorzugt zwischen 2:1 und 3:1. Als Metallsalz wird in diesem Fall Zinkacetat verwendet.

Um die Primärkristallite dieser bevorzugten Multimetallcyanid-Katalysatorphase in Plättchenform zu erhalten, werden als oberflächenaktive Stoffe insbesondere Fettalkoholalkoxylate, bevorzugt Fettalkoholethoxylate, oder Ethylenoxid/Propylenoxid-Coblockpolymere zugesetzt. Die oberflächenaktiven Stoffe können sowohl im Fällschritt als auch im Umkristallisationsschritt zugesetzt werden. Bevorzugt werden die oberflächenaktiven Stoffe nach dem Fällschritt und vor dem Umkristallisationsschritt zugesetzt.

Der Verlauf der Umkristallisation kann, sofern sich makroskopisch meßbare Größen ändern, durch Messungen verfolgt werden. Solche Größen können der pH-Wert oder auch die Feststoffoberfläche sein, wobei die Änderung der Feststoffoberfläche durch Lichtstreuung verfolgt werden kann.

Die erfindungsgemäß hergestellten Multimetallcyanid-Katalysatoren weisen eine sehr geringe Agglomeration auf. 90% Prozent der Teilchen besitzen eine durch Laserbeugung bestimmbare Teilchengröße im Bereich von 0,1 µm bis 100 µm, bevorzugt im Bereich von 0,1 µm bis 30 µm, insbesondere bevorzugt 0,1µm bis 20µm. Der erfindungsgemäße Katalysator besitzt einen X50-Wert der gemessenen Teilchengrößenverteilung kleiner 20 µm, bevorzugt kleiner 15 µm, insbesondere kleiner 10 µm.

Die erfindungsgemäßen Katalysatoren werden vorzugsweise zur Herstellung von Polyetheralkoholen der Funktionalität 1 bis 8, bevorzugt 1 bis 3, durch ringöffnende Polymerisation von Alkylenoxiden mit OH-funktionellen Startern verwendet.

Die Katalysatoren werden bei der Herstellung der Polyetheralkohole in Konzentrationen kleiner 0,1 Gew.-%, bevorzugt kleiner 500 ppm, insbesondere bevorzugt kleiner 250 ppm, besonders bevorzugt kleiner 100 ppm, jeweils bezogen auf den resultierenden Polyetheralkohol, eingesetzt.

Als Startsubstanzen für die Herstellung von Polyetheralkoholen unter Verwendung der erfindungsgemäßen DMC-Katalysatoren werden Alkohole mit einer Funktionalität von 1 bis 8 eingesetzt. Die Funktionalität und die Struktur der als Starter eingesetzten Alkohole richtet sich nach der vorgesehenen Verwendung der Polyetheralkohole. So werden für Polyetheralkohole, die zur Herstellung von Polyurethan-Elastomeren eingesetzt werden, insbesondere zweifunktionelle Alkohole eingesetzt. Zur Herstellung von Polyetheralkoholen, die zur Herstellung von Polyurethan-Weichschaumstoffen eingesetzt werden, kommen als Startsubstanzen vorzugsweise zwei- bis vierfunktionelle Alkohole zum Einsatz. Zur Herstellung von Polyetheralkoholen, die zur Herstellung von Polyurethan-Hartschaumstoffen eingesetzt werden, kommen als Startsubstanzen vorzugsweise vier- bis achtfunktionelle Alkohole zum Einsatz. Als Startsubstanzen für die Herstellung von Polyetheralkoholen unter Verwendung der erfindungsgemäßen Katalysatoren können auch Umsetzungsprodukte der genannten Alkohole mit Alkylenoxiden eingesetzt werden, wobei diese Umsetzung unter Verwendung von anderen Katalysatoren, insbesondere alkalischen Katalysatoren, wie Kaliumhydroxid, durchgeführt werden kann.

Beispiele für Alkohole, die als Startsubstanzen für die Herstellung von Polyetheralkoholen eingesetzt werden können, sind Ethylenglykol, Diethylenglykol, Polyethylenglykol, Propylenglykol, Dipropylenglykol, Polypropylenglykol, Glyzerin, Glyzerinalkoxylat, Trimethylolpropan, Trimethylolpropanalkoxylat, Pentaerythrit, Glucose, Saccharose.

Eine weitere Verbindungsklasse, die mit Hilfe der erfindungsgemäßen Katalysatoren hergestellt werden kann, sind Anlagerungsprodukte von Alkylenoxiden an langkettige Alkohole, beispielsweise Fettalkohole. Derartige Verbindungen werden beispielsweise als Tenside verwendet. Als Alkylenoxide werden üblicherweise aliphatische Alkylenoxide mit 2 bis 10 Kohlenstoffatomen und/oder Styroloxid, vorzugsweise Ethylenoxid und/oder Propylenoxid, eingesetzt.

Die mit den erfindungsgemäßen Katalysatoren hergestellten Polyetherole weisen keinen oder einen verringerten Anteil an hochmolekularen Anteilen im Vergleich zu Polyetherolen, die mit nicht erfindungsgemäß hergestellte Multimetallcyanid-Katalysatoren hergestellt wurden, auf.

Die Verringerung der hochmolekularen Anteile läßt sich sehr gut an der Viskosität eines Polyetheralkohols ablesen, vorausgesetzt daß OH-Zahl und Funktionalität der zu vergleichenden Polyether gleich ist.

Die Erfindung soll an nachfolgenden Beispielen näher beschrieben werden.

### Beispiel A

### Herstellung der Hexacyanocobaltatsäure:

7 1 stark saurer Ionenaustauscher, der sich in der Natriumform befand, (Amberlite® 252 Na, Fa. Rohm & Haas) wurden in eine Austauschersäule (Länge 1m, Volumen 7,71) gefüllt. Der Ionenaustauscher wurde anschließend in die H-Form überführt, indem 10 %-ige Salzsäure mit einer Geschwindigkeit von 2 Bettvolumen pro Stunde 9 Stunden lang über die Austauschersäule gefahren wurde, bis der Natrium-Gehalt im Austrag kleiner 1 ppm betrug. Anschließend wurde der Ionenaustauscher mit Wasser neutral gewaschen.

Der regenerierte Ionenaustauscher wurde nun benutzt, um eine im wesentlichen alkalifreie Hexacyanocobaltatsäure herzustellen. Dazu wurde eine 0,24-molare Lösung von Kaliumhexacyanocobaltat in Wasser mit einer Geschwindigkeit von einem Bettvolumen pro Stunde über den Austauscher gefahren. Nach 2,5 Bettvolumen wurde von der Kaliumhexacyanocobaltat-Lösung auf Wasser gewechselt. Die erhaltenen 2,5 Bettvolumen hatten im Mittel einen Gehalt von Hexacyanocobaltatsäure von 4,5 Gew.-% und Alkaligehalte kleiner 1 ppm.

Die für die weiteren Beispieleverwendeten Hexacyanocobaltatsäure-Lösungen wurden entsprechend mit Wasser verdünnt.

### Vergleichsbeispiel 1

In einem Rührkessel mit einem Volumen von 20 l, ausgestattet mit einem Schrägblattrührer, wurden 8071g wässrige Zinkacetat-Dihydrat-Lösung (Zinkgehalt: 2,6 Gew.-%, Gehalt an Pluronic® PE 6200 (BASF AG): 1,2 Gew.-% bezogen auf die Zinkacetat-Lösung) vorgelegt und unter Rühren auf 60°C erwärmt. Anschließend wurden unter Rühren mit einer Rührleistung von 1 W/l 9475g wässrige Hexacyanocobaltsäure (Cobalt-Gehalt: 9g/l, Gehalt an Pluronic® PE 6200: 1,2 Gew.-%), welche auf ebenfalls auf 60°C temperiert war, innerhalb von 20 min zugefahren. Die so erhaltene Fällsuspension wurde 60 min nachgerührt, anschließend abfiltriert und auf dem Filter mit dem 12fachen Kuchenvolumen an Wasser gewaschen.

Der X50-Wert der mittels Laserbeugung in der Fällsuspension bestimmten Partikelgrößen betrug 13 µm.

Das Röntgendiffraktogramm des so erhaltenen Feststoffs ließ sich monoklin indizieren. Der Teilchenhabitus war laut elektronenmikroskopischen Aufnahmen plättchenförmig, die Primärteilchen waren stark agglomeriert.

Ein Teil des feuchten Filterkuchens wurde anschließend mittels Ultraturrax® in Polypropylenglykol der Molmasse 400g/mol dispergiert. Die dabei erhaltene Suspension hatte einen Multimetallcyanidgehalt von 5 Gew.-%. Der dispergierte Katalysator wird als V1a bezeichnet.

Ein anderer Teil des feuchten Filterkuchens wurde mittels Rührwerksmühle (Drais Labormühle, Scheibenrührwerk, Kugeln aus Silizium-Aluminium-Zirkonmischoxidkeramik, Kugeldurchmesser 0,6-0,8 mm, Dispergierdauer: 60 min) in Polypropylenglykol der Molmasse 400g/mol dispergiert. Die dabei erhaltene Suspension hatte einen Multimetallcyanidgehalt von 5 Gew.-%. Der X50-Wert der mittels Laserbeugung in der Polypropylenglykoldispersion bestimmten Partikelgrößen betrug 2,2 µm. Der dispergierte Katalysator wird als V1b bezeichnet.

### Vergleichsbeispiel 2

In einem Rührkessel mit einem Volumen von 3 l, ausgestattet mit einem Höschrührer, wurden 1460g wässrige Zinkacetat-Dihydrat-Lösung (Zinkgehalt: 2,4 Gew.-%, Gehalt an Pluronic® PE 6200 (BASF AG) : 2,6 Gew.-% bezogen auf die Zinkacetat-Lösung) vorgelegt und unter Rühren auf 60°C erwärmt. Anschließend wurden unter Rühren mit einer Rührleistung von 1 W/l 1719g wässrige Hexacyanocobaltsäure (Cobalt-Gehalt: 9g/l, kein Pluronic® PE 6200), welche auf ebenfalls auf 60°C temperiert war, innerhalb von 20 min zugefahren. Die so erhaltene Fällsuspension wurde 60 min nachgerührt, anschließend abfiltriert und auf dem Filter mit dem 12fachen Kuchenvolumen an Wasser gewaschen.

Der X50-Wert der mittels Laserbeugung in der Fällsuspension bestimmten Partikelgrößen betrug 22 µm.

Der feuchte Filterkuchen hatte einen Multimetallcyanid-Gehalt von 15,3 Gew.-%.

Das Röntgendiffraktogramm des so erhaltenen Feststoffs ließ sich monoklin indizieren. Der Teilchenhabitus war plättchenförmig, die Primärteilchen waren stark agglomeriert.

Der feuchte Filterkuchen wurde anschließend in Polypropylenglykol der Molmasse 400g/mol dispergiert. Die dabei erhaltene Suspension hatte einen Multimetallcyanidgehalt von 5 Gew.-%. Der dispergierte Katalysator wird als V2 bezeichnet.

### Beispiel 1

In einem Rührkessel mit einem Volumen von 3 1, ausgestattet mit einem Höschrührer, pH-Sonde und Streulicht-Sonde, wurden 1724 g wässrige Hexacyanocobaltsäure (Cobalt-Gehalt: 9 g/l, Gehalt an Pluronic® PE 6200: 1,2 Gew.-%) vorgelegt und unter Rühren auf 60°C erwärmt. Anschließend wurden unter Rühren mit einer Rührleistung von 1 W/l 1464g wässrige Zinkacetat-Dihydrat-Lösung (Zinkgehalt: 2,6 Gew.-%, Gehalt an Pluronic® PE 6200 (BASF AG): 1,2 Gew.-% bezogen auf die Zinkacetat-Lösung), welche auf ebenfalls auf 60°C temperiert war, innerhalb von 20 min zugefahren. Eine am Ende der Dosierung gezogene Probe ergab bei röntgenographischer Untersuchung, daß die erhaltene Multimetallcyanidverbindung kubische Struktur aufwies.

Die so erhaltene Fällsuspension wurde nun bei 60°C 60 min nachgerührt. In diesem Zeitraum fiel der pH-Wert von 4,0 auf 3,4. Anschließend wurde der Feststoff abfiltriert und auf dem Filter mit dem 12-fachen Kuchenvolumen an Wasser gewaschen.

Der X50-Wert der mittels Laserbeugung in der Fällsuspension bestimmten Partikelgrößen betrug 7 µm.

Der feuchte Filterkuchen hatte einen Multimetallcyanid-Gehalt von 20,8 Gew.-%. Das Röntgendiffraktogramm des so erhaltenen Feststoffs ließ sich monoklin indizieren. Der Teilchenhabitus war plättchenförmig, die Primärteilchen waren nur schwach agglomeriert.

Der feuchte Filterkuchen wurde anschließend in Polypropylenglykol der Molmasse 400g/mol dispergiert. Die dabei erhaltene Suspension hatte einen Multimetallcyanidgehalt von 5 Gew.-%. Der dispergierte Katalysator wird als 1 bezeichnet.

### Beispiel 2

In einem Rührkessel mit einem Volumen von 1 l, ausgestattet mit einem Scheibenrührer, pH-Sonde und Streulicht-Sonde, wurden 537 g wässrige Hexacyanocobaltsäure (Cobalt-Gehalt: 9,2 g/l, Gehalt an Pluronic® PE 6200: 1,2 Gew.-%) vorgelegt und unter Rühren auf 50°C erwärmt. Anschließend wurden unter Rühren mit einer Rührleistung von 1 W/l 476 g wässrige Zinkacetat-Dihydrat-Lösung (Zinkgehalt: 2,6 Gew.-%, Gehalt an Pluronic® PE 6200 (BASF AG) 1,2 Gew.-% bezogen auf die Zinkacetat-Lösung), welche auf ebenfalls auf 50°C temperiert war, innerhalb von 20 min zugefahren. Die röntgenographische Untersuchung einer Probe am Ende der Dosierung ergab, daß die Multimetallcyanidverbindung ein kubisches Kristallsystem aufwies.

Die so erhaltene Fällsuspension wurde bei 50°C 45 min nachgerührt. Der pH-Wert fiel in diesem Zeitraum von 4,1 auf 3,5. Anschließend wurde der Feststoff abfiltriert und auf dem Filter mit dem 6fachen Kuchenvolumen an Wasser gewaschen.

Der X50-Wert der mittels Laserbeugung in der Fällsuspension bestimmten Partikelgrößen betrug 4 µm.

Der feuchte Filterkuchen hatte einen Multimetallcyanid-Gehalt von 18,9 Gew.-%. Das Röntgendiffraktogramm des so erhaltenen Feststoffs ließ sich monoklin indizieren. Der Teilchenhabitus war plättchenförmig, die Primärteilchen waren nur schwach agglomeriert.

Der feuchte Filterkuchen wurde anschließend in Polypropylenglykol der Molmasse 400 g/mol dispergiert. Die dabei erhaltene Suspension hatte einen Multimetallcyanidgehalt von 5 Gew.-%. Der dispergierte Katalysator wird als 2 bezeichnet.

### Beispiel 3

In einem Rührkessel mit einem Volumen von 30 l, ausgestattet mit einem Scheibenrührer, Tauchrohr für die Dosierung, pH-Sonde und Streulicht-Sonde, wurden 16500g wässrige Hexacyanocobaltsäure (Cobalt-Gehalt: 8,2 g/l, Gehalt an Pluronic® PE 6200: 1,8 Gew.-%) vorgelegt und unter Rühren auf 50°C erwärmt. Anschließend wurden unter Rühren mit einer Rührleistung von 1 W/l 9013 g wässrige Zinkacetat-Dihydrat-Lösung (Zinkgehalt: 2,5 Gew.-%, Gehalt an Pluronic® PE 6200 (BASF AG): 1,8 Gew.-% bezogen auf die Zinkacetat-Lösung), welche auf ebenfalls auf 50°C temperiert war, innerhalb von 45 min zugefahren.

Das zu diesem Zeitpunkt, am Ende der Fällung, erreichte molare Zink:Cobalt-Verhältnis betrug 1,5:1. Der Feststoff, der zu diesem Zeitpunkt in der Fällsuspension vorlag, zeigte ein Röntgendiffraktogramm, das sich kubisch indizieren ließ.

Die restlichen 4387 g wässrige Zinkacetat-Dihydrat-Lösung (Zinkgehalt: 2,5 Gew.-%, Gehalt an Pluronic® PE 6200 (BASF AG): 1,8 Gew.-%, bezogen auf die Zinkacetat-Lösung) wurden dann unter Rühren mit einer Rührenergie von 1W/l innerhalb 5 min zudosiert.

Das molare Zink:Cobaltverhältnis betrug zu diesem Zeitpunkt 2,23:1, der pH-Wert lag bei 3,94. Die Suspension wurde eine Stunde lang nachgerührt. Der pH-Wert fiel dieser Zeit von 3,94 auf 3,64 und blieb dann konstant. Die so erhaltene Fällsuspension wurde anschließend abfiltriert und auf dem Filter mit dem 6-fachen Kuchenvolumen an Wasser gewaschen.

Der X50-Wert der mittels Laserbeugung in der Fällsuspension bestimmten Partikelgrößen betrug 4,5 µm.

Der feuchte Filterkuchen hatte einen Multimetallcyanid-Gehalt von 18,9 Gew.-%. Das Röntgendiffraktogramm des erhaltenen Feststoffs ließ sich monoklin indizieren. Der Teilchenhabitus war plättchenförmig, die Primärteilchen waren nur schwach agglomeriert.

Der feuchte Filterkuchen wurde anschließend mittels Spalt-Rotor-Mühle in Polypropylenglykol der Molmasse 400 g/mol dispergiert. Die dabei erhaltene Suspension hatte einen Multimetallcyanidgehalt von 5 Gew.-%. Der dispergierte Katalysator wird als 3 bezeichnet.

### Beispiel 4

In einem Rührkessel mit einem Volumen von 2 l, ausgestattet mit einem Scheibenrührer, Tauchrohr für die Dosierung, pH-Sonde und Streulicht-Sonde, wurden 450 g wässrige Hexacyanocobaltsäure (Cobalt-Gehalt: 9 g/l) vorgelegt und unter Rühren auf 40°C erwärmt. Anschließend wurden unter Rühren mit einer Rührleistung von 1 W/l 264,34 g wässrige Zinkacetat-Dihydrat-Lösung (Zinkgehalt: 2,55 Gew.-%), welche ebenfalls auf 40°C temperiert war, innerhalb von 15 min zugefahren. Das vorliegende molare Zink:Cobalt-Verhältnis betrug 1,5:1. Der Feststoff, der zu diesem Zeitpunkt in der Fällsuspension vorlag, zeigte ein Röntgendiffraktogramm, das sich kubisch indizieren ließ.

Nach Ziehen von Proben für Analysen verblieben in der Apparatur 597,7 g DMC-Suspension.

Zu dieser Suspension wurden unter Rühren (1 W/l) 7,17 g Pluronic® PE 6200 (BASF AG) zu gegeben.

Anschließend wurden unter Rühren mir einer Rührleistung von 1 W/l weitere 107,87 g wässrige Zinkacetat-Dihydrat-Lösung (Zinkgehalt: 2,55 Gew.-%, Gehalt an Pluronic® PE 6200 bezogen auf die Masse an Zinkacetat-Lösung: 1,2 Gew.-%) bei 50°C innerhalb 5 min zudosiert.

Das molare Zink:Cobaltverhältnis betrug zu diesem Zeitpunkt 2,23:1, der pH-Wert lag bei 3,9. Die Suspension wurde eine Stunde lang nachgerührt. Der pH-Wert fiel dieser Zeit von 3,9 auf 3,1 und blieb dann konstant. Die so erhaltene Fällsuspension wurde anschließend abfiltriert und auf dem Filter mit dem 6-fachen Kuchenvolumen an Wasser gewaschen.

Der X50-Wert der mittels Laserbeugung in der Fällsuspension bestimmten Partikelgrößen betrug 6,6 µm.

Der feuchte Filterkuchen hatte einen Multimetallcyanid-Gehalt von 25,4 Gew.-%. Das Röntgendiffraktogramm des erhaltenen Feststoffs ließ sich monoklin indizieren. Der Teilchenhabitus war plättchenförmig, die Primärteilchen waren nur schwach agglomeriert.

Der feuchte Filterkuchen wurde anschließend mittels Ultraturrax® in Polypropylenglykol der Molmasse 400g/mol dispergiert. Die dabei erhaltene Suspension hatte einen Multimetallcyanidgehalt von 5 Gew.-%. Der dispergierte Katalysator wird als 4 bezeichnet.

### Beispiel 5

In einem Rührkessel mit einem Volumen von 2 l, ausgestattet mit einem Scheibenrührer, Tauchrohr für die Dosierung, pH-Sonde und Streulicht-Sonde, wurden 413 g wässrige Hexacyanocobaltsäure (Cobalt-Gehalt: 9 g/l Cobalt) vorgelegt und unter Rühren auf 70°C erwärmt. Anschließend wurden unter Rühren mit einer Rührleistung von 1 W/l 238 g wässrige Zinkacetat-Dihydrat-Lösung (Zinkgehalt: 2,6 Gew.-%), welche auf ebenfalls auf 70°C temperiert war, innerhalb von 15 min zugefahren. Das vorliegende molare Zink:Cobalt-Verhältnis betrug 1,5:1. Der Feststoff, der zu diesem Zeitpunkt in der Fällsuspension vorlag, zeigte ein Röntgendiffraktogramm, das sich kubisch indizieren ließ.

Die Suspension wurde aus dem Reaktor abgelassen und in Vorlagegefäß umgefüllt. Der Reaktor wurde daraufhin mehrmals mit Wasser gespült und getrocknet.

In den Reaktor wurden nun 92,7 g wässrige Zinkacetat-Dihydrat-Lösung (Zinkgehalt: 2,6 Gew.-%), 301,6 g Wasser und 4,73 g Pluronic® PE 6200 vorgelegt und unter Rühren mit einer Rührleistung von 1W/l auf 50°C erwärmt. Zu dieser vorgelegten Zinkacetat-Lösung wurden innerhalb von 20 min 510,4 g der vorher hergestellten DMC-Suspension, welche ebenfalls auf 50°C temperiert wurde, zudosiert. Das Zink/Cobalt-Verhältnis betrug zu diesem Zeitpunkt 2,23:1. Die Suspension wurde zwei Stunden lang nachgerührt. Die so erhaltene Fällsuspension wurde anschließend abfiltriert und auf dem Filter mit dem 6-fachen Kuchenvolumen an Wasser gewaschen.

Der X50-Wert der mittels Laserbeugung in der Fällsuspension bestimmten Partikelgrößen betrug 9,6 µm. Der feuchte Filterkuchen hatte einen Multimetallcyanid-Gehalt von 25,4 Gew.-%. Das Röntgendiffraktogramm des erhaltenen Feststoffs ließ sich monoklin indizieren. Der Teilchenhabitus war plättchenförmig, die Primärteilchen waren nur schwach agglomeriert.

Der feuchte Filterkuchen wurde anschließend mittels Ultraturrax® in Polypropylenglykol der Molmasse 400g/mol dispergiert. Die dabei erhaltene Suspension hatte einen Multimetallcyanidgehalt von 5 Gew.-%. Der dispergierte Katalysator wird als 5 bezeichnet.

### Beispiel 6

In einem Rührkessel mit einem Volumen von 30 l, ausgestattet mit einem Propellerrührer, Tauchrohr für die Dosierung, pH-Sonde und Streulicht-Sonde, wurden 16000 g wässrige Hexacyanocobaltsäure (Cobalt-Gehalt: 9 g/l) vorgelegt und unter Rühren auf 50°C erwärmt. Anschließend wurden unter Rühren mit einer Rührleistung von 0,4 W/l 9224 g wässrige Zinkacetat-Dihydrat-Lösung (Zinkgehalt: 2,6 Gew.-%), welche auf ebenfalls auf 50°C temperiert war, innerhalb von 15 min zugefahren.

Das zu diesem Zeitpunkt, am Ende der Fällung, erreichte molare Zink:Cobalt-Verhältnis betrug 1,5:1. Der Feststoff, der zu diesem Zeitpunkt in der Fällsuspension vorlag, zeigte ein Röntgendiffraktogramm, das sich kubisch indizieren ließ.

Zu dieser Fällsuspension wurden 351 g Pluronic® PE 6200 (BASF AG) zugesetzt und die Mischung weitere 10 min gerührt.

Anschließend wurden weitere 3690 g wässrige Zinkacetat-Dihydrat-Lösung (Zinkgehalt: 2,6 Gew.-%) unter Rühren mit einer Rührenergie von 0,4 W/l innerhalb 5 min zudosiert.

Das molare Zink : Cobaltverhältnis betrug zu diesem Zeitpunkt 2,1:1, der pH-Wert lag bei 4,02. Die Suspension wurde zwei Stunden lang nachgerührt. Der pH-Wert fiel in dieser Zeit von 4,02 auf 3,27 und blieb dann konstant. Die so erhaltene Fällsuspension wurde anschließend abfiltriert und auf dem Filter mit dem 6-fachen Kuchenvolumen an Wasser gewaschen.

Der X50-Wert der mittels Laserbeugung in der Fällsuspension bestimmten Partikelgrößen betrug 8,0 µm.

Der feuchte Filterkuchen hatte einen Multimetallcyanid-Gehalt von 17,9 Gew.-%. Das Röntgendiffraktogramm des erhaltenen Feststoffs ließ sich monoklin indizieren. Der Teilchenhabitus war plättchenförmig, die Primärteilchen waren nur schwach agglomeriert.

5586 g feuchter Filterkuchen wurden in einem 30 l-Reaktor, ausgerüstet mit Scheibenrührer, gegeben. Dazu wurden 19 kg Tridekanol® N (BASF AG) zugesetzt und der Feststoff unter Rühren dispergiert. Anschließend wurde die Suspension auf 80°C erwärmt und durch Anlegen von Vakuum das Wasser innerhalb von 8 h aus der Suspension abdestilliert.

Die in Tridekanol® N suspendierte Multimetallcyanidverbindung wurde anschließend mittels Spalt-Rotor-Mühle noch einmal dispergiert. Die dabei erhaltene Suspension hatte einen Multimetallcyanidgehalt von 5 Gew.-%. Der dispergierte Katalysator wird als 6 bezeichnet.

### Beispiel 7

In einem 1,5 l Becherglas, ausgerüstet mit Thermometer, pH-Meter und Schraubenrührer, wurden 400 g Hexacyanocobaltsäure (Cobaltgehalt: 9 g/l) und 4,8 g Pluronic® PE 6200 (BASF AG) vorgelegt und unter Rühren bei 450 U/min auf 50°C erwärmt. Anschließend wurde unter Rühren bei 50°C 275,6 g einer ebenfalls auf 50°C erwärmten wässrigen Lösung aus Zink-(II)-acetat und Mangan-(II)-acetat (Zinkgehalt: 1,1 Gew.-%, Mangangehalt: 0,91 Gew.-%, molares Zink/Mangan-Verhältnis: 1:1, Gehalt an Pluronic® PE 6200: 1,2 Gew.-%) zugefahren. Der pH-Wert betrug am Ende der Dosierung 2,97.

Die Suspension und die Zink/Mangan-Lösung wurden nun auf 70°C erwärmt.

Anschließend wurden weitere 147 g der wässrigen Zink-(II)-acetat/Mangan-(II)-acetat-Lösung zu der Suspension dosiert. Der pH-Wert der Suspension betrug am Ende der Dosierung 4,28.

Während einer 1 Stunde Rühren bei 70°C fiel der pH-Wert der Suspension von 4,28 auf 4,02.

Der farblose Feststoff wurde abfiltriert und mit dem 6-fachen Kuchenvolumen an Wasser gewaschen.

Das Röntgendiffraktogramm des erhaltenen Feststoffs ließ sich monoklin indizieren. Der Teilchenhabitus war plättchenförmig. Im Festkörper konnte Zink-(II) partiell durch Mangan-(II) ersetzt werden.

### Beispiel 8

In einem 1,5 l Becherglas, ausgerüstet mit Thermometer, pH-Meter und Schraubenrührer wurden 400 g Hexacyanocobaltsäure (Cobaltgehalt: 9 g/l) und 4,8 g Pluronic® PE 6200 (BASF AG) vorgelegt und unter Rühren bei 450 U/min auf 50°C erwärmt. Anschließend wurde unter Rühren bei 50°C 288 g einer ebenfalls auf 50°C erwärmten wässrigen Lösung aus Zink-(II)-acetat und Eisen-(II)-acetat (Zinkgehalt: 1,56 Gew.-%, Eisengehalt: 0,44 Gew.-%, molares Zink/Eisen-Verhältnis: 3:1, Gehalt an Pluronic® PE 6200: 1,2 Gew.-%) zugefahren. Der pH-Wert betrug am Ende der Dosierung 2,44.

Die Suspension und die Zink/Eisen-Lösung wurden auf 75°C erwärmt. Anschließend wurden weitere 154 g der wässrigen Zink-(II)-acetat/Eisen-(II)-acetat-Lösung zudosiert. Der pH-Wert der Suspension betrug am Ende der Dosierung 4,22. Nach 1,5 Stunden wurde die Temperatur auf 80°C erhöht und noch eine Stunde nachgerührt. Während dieser Stunde fiel der pH-Wert der Suspension von 4,22 auf 3,88.

Der bräunliche Farbstoff wurde abfiltriert und mit dem 6-fachen Kuchenvolumen an Wasser gewaschen.

Das Röntgendiffraktogramm des erhaltenen Feststoffs ließ sich monoklin indizieren. Der Teilchenhabitus war plättchenförmig. Im Festkörper konnte Zink-(II) partiell durch Eisen-(II) ersetzt werden.

### Beispiel 9

In einem 1,5 l Becherglas, ausgerüstet mit Thermometer, pH-Meter und Schraubenrührer wurden 400 g Hexacyanocobaltsäure (Cobaltgehalt: 9 g/l) und 4,8 g Pluronic® PE 6200 (BASF AG) vorgelegt und unter Rühren (450 U/min) auf 50°C erwärmt. Anschließend wurde unter Rühren bei 50°C 276,3 g einer ebenfalls auf 50°C erwärmten wässrigen Lösung aus Zink-(II)-acetat und Cobalt-(II)-acetat (Zinkgehalt: 2,0 Gew.-%, Cobaltgehalt: 0,18 Gew.-%, molares Zink/Cobalt-Verhältnis: 10:1, Gehalt an Pluronic® PE 6200: 1,2 Gew.-%) zugefahren. Der pH-Wert betrug am Ende der Dosierung 3,53.

Anschließend wurden weitere 145,6 g der wässrigen Zink-(II)-acetat/Cobalt-(II)-acetat-Lösung zudosiert. Der pH-Wert der so erhaltenen rosafarbenen Suspension betrug am Ende der Dosierung 4,34.

Nach einer 1 Stunde Rühren bei 50°C wurde die Temperatur der Suspension auf 60°C erhöht, eine weitere Stunde später auf 65°C erhöht. Bei 65°C wurde die Suspension noch 3 Stunden weitergerührt. In dieser Zeit fiel der pH-Wert der Suspension von 4,34 auf 4,11. Die Farbe der Suspension schlug von rosa nach blau-violett um.

Der blau-violette Farbstoff wurde abfiltriert und mit dem 6-fachen Kuchenvolumen an Wasser gewaschen.

Das Röntgendiffraktogramm des erhaltenen Feststoffs ließ sich monoklin indizieren. Der Teilchenhabitus war plättchenförmig. Im Festkörper konnte Zink-(II) partiell durch Cobalt-(II) ersetzt werden.

### Beispiel 10

In einem 1,5 l Becherglas, ausgerüstet mit Thermometer, pH-Meter und Schraubenrührer wurden 400 g Hexacyanocobaltsäure (Cobaltgehalt: 9 g/l) und 4,8g Pluronic® PE 6200 (BASF AG) vorgelegt und unter Rühren bei 450 U/min auf 50°C erwärmt. Anschließend wurde unter Rühren bei 50°C 297,4 g einer ebenfalls auf 50°C erwärmten wässrigen Lösung aus Zink-(II)-acetat und Kupfer-(II)-acetat (Zinkgehalt: 1,51 Gew.-%, Kupfergehalt: 0,49 Gew.-%, molares Zink/Kupfer-Verhältnis: 3:1, Gehalt an Pluronic® PE 6200: 1,2 Gew.-%) zugefahren. Der pH-Wert betrug am Ende der Dosierung 2,32.

Anschließend wurden weitere 158,6 g der wässrigen Zink-(II)-acetat/Kupfer-(II)-acetat-Lösung zudosiert. Der pH-Wert der Suspension betrug am Ende der Dosierung 4,16.

Nach 2 Stunden wurde die Temperatur auf 70°C erhöht nach einer weiteren Stunde auf 75°C erhöht und noch eine Stunde nachgerührt. Während dieser Stunde fiel der pH-Wert der Suspension von 4,16 auf 4,10.

Der türkisfarbene Farbstoff wurde abfiltriert und mit dem 6-fachen Kuchenvolumen an Wasser gewaschen.

Das Röntgendiffraktogramm des so erhaltenen Feststoffs zeigte eine Majoritätsphase, die sich monoklin indizieren ließ, und eine Minoritätsphase, die sich kubisch indizieren ließ. Der Teilchenhabitus der Majoritätsphase war plättchenförmig, der Teilchenhabitus der Minoritätsphase war kugelförmig. Im Festkörper konnte Zink-(II) partiell durch Kupfer-(II) ersetzt werden.

### Herstellung von Polyetheralkoholen

### Vergleichsbeispiel 3

Die Synthese wurde in einem gereinigten und getrockneten 11-Rührautoklaven durchgeführt. Es wurden 92 g eines propoxylierten Glyzerins mit einem Molekulargewicht Mw von 400 sowie 8 g propoxyliertes Ethylenglykol der Molmasse 250 g/mol in den Rührkessel gegeben und mit 100 ppm Multimetallcyanidkatalysator V1a (entspricht 1,64 g Katalysatorsuspension) versetzt. Der Kesselinhalt wurde mit Stickstoff inertisiert und insgesamt 1 h bei 125°C im Vakuum behandelt. Bei 125°C wurden innerhalb von 35 min erst 160 g Propylenoxid, anschließend 470 g eines ein Gemisches aus 390 g Propylenoxid und 80 g Ethylenoxid zudosiert. Anschließend wurden 90 g Propylenoxid angelagert. Es wurde weitere 3 h gerührt und bei 125°C und 9 mbar entgast. Die Aufarbeitung des Produkts erfolgte durch Filtration. Der entstandene Polyetheralkohol wies folgende Kennwerte auf:

| | |
|---|---|
| Hydroxylzahl | 44,85 mg KOH/g; |
| Viskosität bei 25 °C | 3239 mPas; |
| Gehalt an Zn/Co | 32,5/14,7 ppm |

### Vergleichsbeispiel 4

Die Synthese wurde in einem gereinigten und getrockneten 11-Rührautoklaven durchgeführt. Es wurden 92 g eines propoxylierten Glyzerins mit einem Molekulargewicht Mw von 400 sowie 8 g propoxyliertes Ethylenglykol mit einem Molekulargewicht Mw von 250 g/mol in den Rührkessel gegeben und mit 100 ppm Multimetallcyanidkatalysator V1b (entspricht 0,83 g Katalysatorsuspension) versetzt. Der Kesselinhalt wurde mit Stickstoff inertisiert und insgesamt 1 h bei 122°C und 0,02 bar Stickstoff im Vakuum behandelt. Bei 120°C wurden innerhalb von 35 min erst 160 g Propylenoxid, anschließend 470 g eines ein Gemisches aus 390 g Propylenoxid und 80 g Ethylenoxid zudosiert. Anschließend wurden 90 g Propylenoxid angelagert. Es wurde weitere 2 h gerührt und bei 125°C und 10 mbar entgast. Die Aufarbeitung des Produkts erfolgte durch Filtration. Der entstandene Polyetheralkohol wies folgende Kennwerte auf:

| | |
|---|---|
| Hydroxylzahl | 47,48 mg KOH/g; |
| Viskosität bei 25 °C | 1932 mPas; |
| Gehalt an Zn/Co | 16,2, 8,5 ppm |

### Vergleichsbeispiel 5

Die Synthese wurde in einem gereinigten und getrockneten 11-Rührautoklaven durchgeführt. Es wurden 92 g eines propoxylierten Glyzerins mit einem Molekulargewicht Mw von 400 sowie 8 g propoxyliertes Ethylenglykol der Molmasse 250 g/mol in den Rührkessel gegeben und mit 100 ppm Multimetallcyanidkatalysator V 2 (entspricht 0,82 g Katalysatorsuspension) versetzt. Der Kesselinhalt wurde mit Stickstoff inertisiert und insgesamt 1 h bei 125°C bei 0,08 bar Stickstoff im Vakuum behandelt. Bei 120°C wurden innerhalb von 57 min erst 160 g Propylenoxid, anschließend 470 g eines Gemisches aus 390 g Propylenoxid und 80 g Ethylenoxid zudosiert. Anschließend wurden 90 g Propylenoxid angelagert. Es wurde weitere 4 h gerührt und bei 125°C und 9 mbar entgast. Die Aufarbeitung des Produkts erfolgte durch Filtration. Der entstandene Polyetheralkohol wies folgende Kennwerte auf:

| | |
|---|---|
| Hydroxylzahl | 45,36 mg KOH/g; |
| Viskosität bei 25 °C | 2782 mPas; |
| Gehalt an Zn/Co | 9,6, 5,5 ppm |

### Beispiel 11

Die Synthese wurde in einem gereinigten und getrockneten 11-Rührautoklaven durchgeführt. Es wurden 92 g eines propoxylierten Glyzerins mit einem Molekulargewicht Mw von 400 sowie 8 g propoxyliertes Ethylenglykol mit einem Molekulargewicht Mw von 250 g/mol in den Rührkessel gegeben und mit 100 ppm Multimetallcyanidkatalysator 1 (entspricht 0,82 g Katalysatorsuspension) versetzt. Der Kesselinhalt wurde mit Stickstoff inertisiert und insgesamt 1h bei 125°C und 0,1 bar Stickstoff im Vakuum behandelt. Bei 125°C wurden innerhalb von 20 min erst 160 g Propylenoxid, anschließend 470 eines ein Gemisches aus 390 g Propylenoxid und 80 g Ethylenoxid zudosiert. Anschließend wurden 90 g Propylenoxid angelagert. Es wurde weitere 2 h gerührt und bei 125°C und 11 mbar entgast. Die Aufarbeitung des Produkts erfolgte durch Filtration. Der entstandene Polyetheralkohol wies folgende Kennwerte auf:

| | |
|---|---|
| Hydroxylzahl: | 46,9 mg KOH/g; |
| Viskosität bei 25 °C: | 1223 mPas; |
| Gehalt an Zn/Co | 3,1, <2 ppm |

### Beispiel 12

Die Synthese wurde in einem gereinigten und getrockneten 11-Rührautoklaven durchgeführt. Es wurden 92 g eines propoxylierten Glyzerins mit einem Molekulargewicht Mw von 400 sowie 8 g propoxyliertes Ethylenglykol mit einem Molekulargewicht Mw von 250 g/mol in den Rührkessel gegeben und mit 100 ppm Multimetallcyanidkatalysator 2 (entspricht 1,64 g Katalysatorsuspension) versetzt. Der Kesselinhalt wurde mit Stickstoff inertisiert und insgesamt 1 h bei 125°C und 0,1 bar Stickstoff im Vakuum behandelt. Bei 125°C wurden innerhalb von 35 min erst 160 g Propylenoxid, anschließend 470 g eines ein Gemisches aus 390 g Propylenoxid und 80 g Ethylenoxid zudosiert. Anschließend wurden 90 g Propylenoxid angelagert. Es wurde weitere 2 h gerührt und bei 125°C und 9 mbar entgast. Die Aufarbeitung des Produkts erfolgte durch Filtration. Der entstandene Polyetheralkohol wies folgende Kennwerte auf:

| | |
|---|---|
| Hydroxylzahl: | 46,5 mg KOH/g; |
| Viskosität bei 25 °C: | 720 mPas; |
| Gehalt an Zn/Co | 6,1, 2,9 ppm |

### Beispiel 13

Die Synthese wurde in einem gereinigten und getrockneten 11-Rührautoklaven durchgeführt. Es wurden 92 g eines propoxylierten Glyzerins mit einem Molekulargewicht Mw von 400 sowie 8 g propoxyliertes Ethylenglykol mit einem Molekulargewicht Mw von 250 g/mol in den Rührkessel gegeben und mit 100 ppm Multimetallcyanidkatalysator 3 (entspricht 1,86 g Katalysatorsuspension) versetzt. Der Kesselinhalt wurde mit Stickstoff inertisiert und insgesamt 1 h bei 125°C und 0,1 bar Stickstoff im Vakuum behandelt. Bei 125°C wurden innerhalb von 55 min erst 160 g Propylenoxid, anschließend 470 g eines ein Gemisches aus 390 g Propylenoxid und 80 g Ethylenoxid zudosiert. Anschließend wurden 90 g Propylenoxid angelagert. Es wurde weitere 1 h gerührt und bei 125°C und 12 mbar entgast. Die Aufarbeitung des Produkts erfolgte durch Filtration. Der entstandene Polyetheralkohol wies folgende Kennwerte auf:

| | |
|---|---|
| Hydroxylzahl: | 48,3 mg KOH/g; |
| Viskosität bei 25 °C: | 662 mPas; |
| Gehalt an Zn/Co | 9,8, 4,6 ppm |

### Beispiel 14

Die Synthese wurde in einem gereinigten und getrockneten 11-Rührautoklaven durchgeführt. Es wurden 92 g eines propoxylierten Glyzerins mit einem Molekulargewicht Mw von 400 sowie 8 g propoxyliertes Ethylenglykol der Molmasse 250 g/mol in den Rührkessel gegeben und mit 100 ppm Multimetallcyanidkatalysator 4 (entspricht 1,64 g Katalysatorsuspension) versetzt. Der Kesselinhalt wurde mit Stickstoff inertisiert und insgesamt 1h bei 125°C und 0,1 bar Stickstoff im Vakuum behandelt. Bei 120°C wurden innerhalb von 50 min erst 160 g Propylenoxid, anschließend 470 g eines ein Gemisches aus 390 g Propylenoxid und 80 g Ethylenoxid zudosiert. Anschließend wurden 90 g Propylenoxid angelagert. Es wurde weitere 2 h gerührt und bei 125°C und 13 mbar entgast. Die Aufarbeitung des Produkts erfolgte durch Filtration. Der entstandene Polyetheralkohol wies folgende Kennwerte auf:

| | |
|---|---|
| Hydroxylzahl: | 49,8 mg KOH/g; |
| Viskosität bei 25 °C: | 603 mPas; |
| Gehalt an Zn/Co | <2, <2 ppm |

### Beispiel 15

Die Synthese wurde in einem gereinigten und getrockneten 11-Rührautoklaven durchgeführt. Es wurden 92 g eines propoxylierten Glyzerins mit einem Molekulargewicht Mw von 400 sowie 8 g propoxyliertes Ethylenglykol mit einem Molekulargewicht Mw von 250 g/mol in den Rührkessel gegeben und mit 100 ppm Multimetallcyanidkatalysator 5 (entspricht 1,64 g Katalysatorsuspension) versetzt. Der Kesselinhalt wurde mit Stickstoff inertisiert und insgesamt 1 h bei 125°C und 0,1 bar Stickstoff im Vakuum behandelt. Bei 125°C wurden innerhalb von 45 min erst 160 g Propylenoxid, anschließend 470 g eines ein Gemisches aus 390 g Propylenoxid und 80 g Ethylenoxid zudosiert. Anschließend wurden 90 g Propylenoxid angelagert. Es wurde weitere 2 h gerührt und bei 125°C und 9 mbar entgast. Die Aufarbeitung des Produkts erfolgte durch Filtration. Der entstandene Polyetheralkohol wies folgende Kennwerte auf:

| | |
|---|---|
| Hydroxylzahl: | 47,1 mg KOH/g; |
| Viskosität bei 25 °C: | 939 mPas; |
| Gehalt an Zn/Co | 3,0, <2 ppm |

### Beispiel 16

In einem 5 l Reaktor wurden 310 g Tridekanol® N und 1,65 g (50 ppm) einer 5 %igen Doppelmetallcyanid Suspension in Tridekanol® N (Katalysator 6) vorgelegt und 2 mal mit Stickstoff inertisiert. Danach wurde der Reaktor auf 105° - 115°C aufgeheizt und 2 h bei 20 mbar entwässert. Anschließend wurde das Vakuum mit Stickstoff aufgehoben und 3 mal mit Stickstoff gespült. Anschließend wurde auf 0,5 bis 1,0 bar Stickstoff aufgepreßt und auf 135°C - 150°C erhitzt Bei diesen Bedingungen wurden 1349 g Propylenoxid zugegeben. Die Nachreaktionszeit betrug ca. 1 - 2 h. Der Reaktor wurde auf 100°C abgekühlt und für 2 h bei 20 mbar bei der genannten Temperatur entgast. Danach wurde der Reaktor auf 60°C abgekühlt und ausgebaut.

Die Ausbeute betrug 1646 g

Anschließend wurde mittels einer Druckfilterpresse mit einem Tiefenfilter (K 150) der Katalysator abfiltriert.

Das entstandene Umsetzungsprodukt wies folgende Kennzahlen auf.

| | |
|---|---|
| Hydroxyzahl | 53 mg KOH/g |
| Kinematische Viskosität 40°C (DIN 51562): | 56,2 mm²/s |
| Wassergehalt (DIN 51777): | 0,07 % |
| Dichte (DIN 51757): | 0,9660 g/cm³ |
| Zn: | < 1 ppm |
| Co: | < 1 ppm |

Die Bestimmung der Hydroxylzahlen erfolgte nach DIN 51562, die Bestimmung der Viskosität in den Beispielen 11 bis 15 und den Vergleichsbeispielen 3 bis 5 erfolgte nach DIN 53015, die Bestimmung der Gehalte an Zink und Kobalt erfolgte mittels Atomabsorptionsspektroskopie.

## Patentansprüche

1. Verfahren zur Herstellung von Multimetallcyanidverbindungen durch Umsetzung eines Metallsalzes mit einer Cyanometallat-Verbindung, umfassend die Schritte
(a) Fällung der Multimetallcyanidverbindung durch Umsetzung eines Metallsalzes mit einer Cyanometallat-Verbindung
(b) Umkristallisation der in Schritt a) gefällten Multimetallcyanidverbindung, indem
b(i) zum Umsetzungsprodukt aus Schritt a) weiteres Metallsalz zugegeben wird, und oder
b(ii) die Temperatur und/oder der pH-Wert des Umsetzungsprodukts aus Schritt a) geändert wird.

2. Verfahren nach Anspruch 1, **dadurch gekennzeichnet, daß** bei Schritt a) die Lösung des Cyanometallats vorgelegt und dazu die Lösung des Metalls zugegeben wird.

3. Verfahren nach Anspruch 1, **dadurch gekennzeichnet, daß** Schritt a) und/oder b) in Gegenwart mindestens eines oberflächenaktiven Mittels durchgeführt wird.

4. Verfahren nach Anspruch 1, **dadurch gekennzeichnet, daß** das oberflächenaktive Mittel ausgewählt ist aus der Gruppe, enthaltend anionische, kationische, nichtionische und/oder polymere Tenside.

5. Verfahren nach Anspruch 1, **dadurch gekennzeichnet, daß** als Cyanometallat-Verbindung eine Cyanometallat-Säure eingesetzt wird.

## Claims

1. A process for preparing multimetal cyanide compounds by reacting a metal salt with a cyanometalate compound comprising the steps
(a) precipitation of the multimetal cyanide compound by reaction of a metal salt with a cyanometalate compound and
(b) recrystallization of the multimetal cyanide compound precipitated in step a) by
b(i)adding further metal salt to the reaction product from step a), and/or
b(ii)changing the temperature and/or the pH of the reaction product from step a).

2. A process as claimed in claim 1, wherein, in step a), the solution of the cyanometalate is initially charged and the solution of the metal is added thereto.

3. A process as claimed in claim 1, wherein step a) and/or b) are/is carried out in the presence of at least one surface-active substance.

4. A process as claimed in claim 1, wherein the surface-active substance is selected from the group consisting of anionic, cationic, nonionic and/or polymeric surfactants.

5. A process as claimed in claim 1, wherein the cyanometalate compound used is a cyanometalic acid.

## Revendications

1. Procédé pour la préparation de composés cyanure polymétalliques par transformation d'un sel de métal avec un composé cyanométallate, comprenant les étapes
(a) de précipitation du composé cyanure polymétallique par transformation d'un sel de métal avec un composé cyanométallate
(b) de recristallisation du composé cyanure polymétallique précipité dans l'étape a)
b(i) en ajoutant au produit de transformation de l'étape a) du sel de métal supplémentaire et/ou
b(ii) en modifiant la température et/ou le pH du produit de transformation de l'étape a).

2. Procédé selon la revendication 1, **caractérisé en ce que** dans l'étape a), on dispose au préalable la solution du cyanométallate et on y ajoute la solution du métal.

3. Procédé selon la revendication 1, **caractérisé en ce que** l'étape a) et/ou l'étape b) est réalisée en présence d'au moins un agent tensioactif.

4. Procédé selon la revendication 1, **caractérisé en ce que** l'agent tensioactif est choisi dans le groupe contenant les agents tensioactifs anioniques, cationiques, non ioniques et/ou polymères.

5. Procédé selon la revendication 1, **caractérisé en ce qu'**on utilise comme composé cyanométallate, un acide cyanométallate.
